# EUROPEAN PATENT SPECIFICATION

(11) **EP 2 604 991 B1**
(45) Date of publication and mention of the grant of the patent: **09.09.2020**
(21) Application number: 10855915.4
(22) Date of filing: 14.10.2010
(51) Int. Cl.: G01M 3/38, G01N 21/41, G01N 21/43

(54) **LIQUID DETECTOR AND LIQUID IDENTIFYING SYSTEM**
FLÜSSIGKEITSDETEKTOR UND SYSTEM ZUR IDENTIFIZIERUNG VON FLÜSSIGKEITEN
DÉTECTEUR DE LIQUIDE ET SYSTÈME D'IDENTIFICATION DE LIQUIDE

(30) Priority: 10.08.2010 JP 2010179523
(43) Date of publication of application: 19.06.2013
(73) Proprietor: IHI Inspection & Instrumentation Co., Ltd., Shinagawa-ku Tokyo 140-0013 (JP)
(72) Inventor: OKUDA, Atsushi, Tokyo 1350061 (JP); FUJITA, Keiichi, Tokyo 1350061 (JP); MARU, Hiroshi, Tokyo 1350061 (JP); SEKIYA, Tatsuo, Tokyo 1350061 (JP)
(74) Representative: Oxley, Robin John George
(86) International application number: PCT/JP2010/068073
(87) International publication number: WO 2012/020514

(56) References cited:
- EP-A1- 0 823 627
- WO-A1-2007/108095
- DE-B3-102004 037 883
- JP-A- 4 149 042
- JP-A- S6 076 646
- JP-A- 60 076 646
- JP-A- 2000 089 042
- JP-A- 2002 296 141
- JP-A- 2006 308 305
- JP-U- 60 025 939

## Description

### Technical Field

The invention relates to a liquid detector and a liquid identifying system.

Priority is claimed on Japanese Patent Application No. 2010-179523, filed August 10, 2010.

### Background Art

As well known in the art, an optical fiber has a dual structure of a core which serves as a light propagation path and has a high refractive index, and a clad which covers the core and has a low refractive index. In this optical fiber, light leakage outside the core is minimized by total reflection at the boundary surface between the core and the clad, thereby realizing long-distance transmission of light.

If the clad of the optical fiber is partially separated and an exposed portion of the core is arranged underwater, since the refractive index of water is lower than the core, light propagates inside the core without leaking outside the core (in a strict sense, the amount of leakage is infinitesimal). On the other hand, if oil is stuck to the exposed core, since the refractive index of oil is higher than the core, light leaks from the portion, where oil is stuck, outside the core.

In recent years, an oil leakage detector which uses the characteristic of the optical fiber, and detects oil leakage in the water on the basis of change in the amount of transmitted light of the optical fiber is put into practical use (see Patent Document 1).

Also known is a sensor for measuring refractive index of liquids comprising a main optical fiber branching into two bent optical measurement fibers having different bend radiuses. The main optical fiber receives input light. The difference between output light from the measurement fibers is a measure for the refractive index of a liquid into which the bent parts of the measurement fibers are immersed (see Patent Document 2).

### Citation List

### Patent Document

[Patent Document 1] Japanese Patent Publication No. JP 4008910 B [Patent Document 2] Japanese Patent Application No. JP S60 76646 A

### Summary of Invention

### Problem to be solved by the Invention

In principle, the oil leakage detector disclosed in Patent Document 1 is not limited to oil, and can detect a liquid having a refractive index higher than the core of the optical fiber. Meanwhile, when there are a plurality of liquids to be detected, it is not possible to identify liquids stuck to the optical fibers. In a case where there are a plurality of liquids (liquids to be detected) which are likely to leak, it is very important to identify a leaked liquid since a measure to be taken by a worker differs depending on the type of an actual leaked liquid.

The invention has been accomplished in consideration of the above-described situation, and an object of the invention is to provide a liquid detector and a liquid identifying system capable of identifying liquids stuck to optical fibers even when there are a plurality of liquids to be detected.

### Solution to Problem

In order to solve the above-described problem, in the invention, as a first solution relating to a liquid detector, there is provided a liquid detector including a plurality of optical fibers provided with bent portions, light emitting elements which are respectively provided in the optical fibers and input light according to electrical signals input from the outside to one end of the optical fibers, and light receiving elements which are respectively provided in the optical fibers and output electrical signals according to light emitted from the other end of the optical fibers to the outside, wherein the bend radiuses of the bent portions of the optical fibers are set in accordance with the refractive indexes of associated liquids to be detected.

As described above, each optical fiber has a dual structure of a core which serves as a light propagation path and has a high refractive index, and a clad which covers the core and has a low refractive index. Even when the optical fiber is bent, if the reflection angle of light propagating through the core of the bent portion is smaller than a critical angle, light propagates inside the core without leaking outside the core. However, if the optical fiber is bent severely, and the reflection angle of light propagating through the core of the bent portion becomes greater than the critical angle, light leaks outside the core.

The inventors have focused on the above-described characteristic of the optical fiber, and have verified the relationship between the bend radius of the bent portion for a plurality of types of liquids and a change rate in the amount of transmitted light (that is, the amount of light leakage due to liquid sticking) by providing the bent portions in the optical fibers and measuring the amount of transmitted light before the liquids are stuck to the bent portions and after the liquids are stuck to the bent portions.

As a result, it is understood that, as the bend radius of the bent portion is small, the amount of light leakage due to liquid sticking increases, and even a liquid having a refractive index lower than the core or even a liquid having a refractive index close to the core can be detected (of course, a liquid having a refractive index higher than the core can be detected).

However, if it is assumed that only one optical fiber is used, and the bend radius of the bent portion is set in accordance with a liquid having a refractive index lower than the core, not only the liquid but also a liquid having a refractive index higher than the liquid undergo change in the amount of transmitted light (light leakage occurs). For this reason, when there are a plurality of liquids to be detected, it is not possible to identify a liquid which is stuck.

Accordingly, the inventors have solved the above-described problem with the configuration of a liquid detector in which a plurality of optical fibers provided with bent portions are used, and the bend radius of the bent portion of each optical fiber is set in accordance with the refractive index of a liquid to be detected.

For example, it is assumed that there are three types of liquids including a liquid A having a refractive index lower than the core, a liquid B having a refractive index close to the core, and a liquid C having a refractive index higher than the core as the liquids to be detected. Furthermore, it is assumed that the bend radius of the bent portion of the first optical fiber is set in accordance with the refractive index of the liquid A, the bend radius of the bent portion of the second optical fiber is set in accordance with the refractive index of the liquid B, and the bend radius of the bent portion of the third optical fiber is set in accordance with the refractive index of the liquid C.

In this case, in the first optical fiber, if a liquid (that is, the liquid A, B, or C) having a refractive index greater than or equal to the liquid A is stuck, change in the amount of transmitted light occurs. In the second optical fiber, if a liquid (that is, the liquid B or C) having a refractive index greater than or equal to the liquid B is stuck, change in the amount of transmitted light occurs. In the third optical fiber, if a liquid (that is, the liquid C) having a refractive index greater than or equal to the liquid C is stuck, change in the amount of transmitted light occurs.

Accordingly, when change occurs only in the first optical fiber of the three optical fibers, it can be determined that the liquid A is stuck. When change occurs only in the first and second optical fibers simultaneously, it can be determined that the liquid B is stuck. When change in the amount of transmitted light occurs in all of the first to third optical fibers simultaneously, it can be determined that the liquid C is stuck. That is, it becomes possible to identify a liquid stuck to each optical fiber.

In the invention, as a second solution relating to a liquid detector, in the first solution, a plurality of bent portions are provided in each of the optical fibers.

With this, as the number of bent portions in one optical fiber increases, the amount of light leakage increases, thereby improving liquid detection accuracy. However, if the amount of light leakage increases excessively, the amount of emitted light of the optical fiber may significantly decrease, and conversely, detection accuracy may be lowered. For this reason, it is preferable that the number of bent portions in one optical fiber be two or three.

In the invention, as a third solution relating to a liquid detector, in the first or second solution, an absorber which absorbs the associated liquid to be detected is loaded in each of the bent portions.

With this, since the amount of the liquid to be detected which is stuck to the bent portion increases, liquid detection accuracy is improved. For example, if the above example is used, an absorber which absorbs the liquid A may be loaded in the bent portion of the first optical fiber, an absorber which absorbs the liquid B may be loaded in the bent portion of the second optical fiber, and an absorber which absorbs the liquid C may be loaded in the bent portion of the third optical fiber.

In the invention, as a solution relating to a liquid identifying system, there is provided a liquid identifying system including the liquid detector having any one of the first to third solutions, and an identifying apparatus which outputs an electrical signal for generating light having the reference light amount for each light emitting element provided in the liquid detector, obtains the amount of received light of each light receiving element as the amount of transmitted light of each optical fiber on the basis of an electrical signal input from each light receiving element provided in the liquid detector, and identifies the liquid to be detected on the basis of change in the amount of transmitted light of each optical fiber.

According to the liquid identifying system, it is possible to automatically identify liquids stuck to the optical fibers of the liquid detector.

### Advantageous Effects of Invention

According to the invention, it is possible to provide a liquid detector and a liquid identifying system capable of identifying liquids stuck to optical fibers even when there are a plurality of liquids to be detected.

### Brief Description of Drawings

FIG. 1 is a schematic view of the configuration of a liquid identifying system in this embodiment.
FIG. 2A is a first view showing the detailed configuration of a first detecting unit 1A.
FIG. 2B is a diagram when a bottom portion 31b of a casing 31 in the first detecting unit 1A is viewed.
FIG. 3 is a second view showing the detailed configuration of the first detecting unit 1A.
FIG. 4A is an explanatory view relating to a liquid detection/identification principle which is employed in this embodiment.
FIG. 4B is a diagram showing the relationship between the type of a liquid and the amount of transmitted light.
FIG. 5 is a diagram showing a mode in which an absorber of a liquid is pressed against a bent portion of each optical fiber.

### Description of Embodiments

Hereinafter, an embodiment of the invention will be described with reference to the drawings.

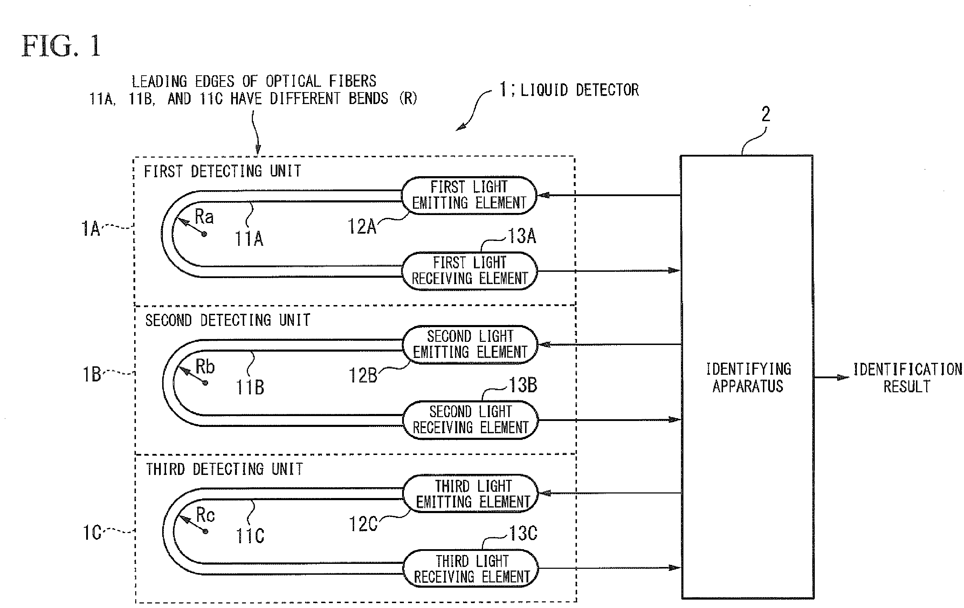

FIG. 1 is a schematic view of the configuration of a liquid identifying system in this embodiment. As shown in FIG. 1, the liquid identifying system in this embodiment includes a liquid detector 1 and an identifying apparatus 2. In this embodiment, it is assumed that there are three types of liquids including a liquid A (for example, water) having a refractive index lower than a core of an optical fiber described below, a liquid B (for example, kerosene fuel) having a refractive index close to the core, and a liquid C (for example, oil) having a refractive index higher than the core as liquids to be detected.

The liquid detector 1 has a first detecting unit 1A including a first optical fiber 11A, a first light emitting element 12A, and a first light receiving element 13A, a second detecting unit 1B including a second optical fiber 11B, a second light emitting element 12B, and a second light receiving element 13B, and a third detecting unit 1C including a third optical fiber 11C, a third light emitting element 12C, and a third light receiving element 13C.

Each of the first optical fiber 11A, the second optical fiber 11B, and the third optical fiber 11C has a dual structure of a core which serves as a light propagation path and has a high refractive index (for example, 1.492), and a clad which covers the core and has a low refractive index (for example, 1.417). Each optical fiber is provided with a bent portion having a bend radius according to the refractive index of a liquid to be detected.

The bend radius Ra of the bent portion provided in the first optical fiber 11A is set in accordance with the refractive index (for example, 1.33) of the liquid A and is set to the smallest value compared to other optical fibers.

The bend radius Rb of the bent portion provided in the second optical fiber 11B is set in accordance with the refractive index (for example, 1.44) of the liquid B and is set to an intermediate value compared to other optical fibers.

The bend radius Rc of the bent portion provided in the third optical fiber 11C is set in accordance with the refractive index (for example, 1.50) of the liquid C and is set to the largest value compared to other optical fibers.

The first light emitting element 12A is a light emitting diode which is individually provided in the first optical fiber 11A, and inputs light according to an electrical signal externally input from the identifying apparatus 2 to one end of the first optical fiber 11A.

The second light emitting element 12B is a light emitting diode which is individually provided in the second optical fiber 11B, and inputs light according to an electrical signal externally input from the identifying apparatus 2 to one end of the second optical fiber 11B.

The third light emitting element 12C is a light emitting diode which is individually provided in the third optical fiber 11C, and inputs light according to an electrical signal externally input from the identifying apparatus 2 to one end of the third optical fiber 11C.

The first light receiving element 13A is a photodiode which is individually provided in the first optical fiber 11A, and externally outputs an electrical signal according to light emitted from the other end of the first optical fiber 11A to the identifying apparatus 2.

The second light receiving element 13B is a photodiode which is individually provided in the second optical fiber 11B, and externally outputs an electrical signal according to light emitted from the other end of the second optical fiber 11B to the identifying apparatus 2.

The third light receiving element 13C is a photodiode which is individually provided in the third optical fiber 11C, and externally outputs an electrical signal according to light emitted from the other end of the third optical fiber 11C to the identifying apparatus 2.

The identifying apparatus 2 outputs electrical signals for generating light having the reference light amount to the first light emitting element 12A, the second light emitting element 12B, and the third light emitting element 12C provided in the liquid detector 1. Though the details will be described below, the identifying apparatus 2 has a function of obtaining the amount of received light of each of the light receiving elements on the basis of the electrical signals input from each of the first light receiving element 13A, the second light receiving element 13B, and the third light receiving element 13C provided in the liquid detector 1 as the amount of transmitted light of each of the first optical fiber 11A, the second optical fiber 11B, and the third optical fiber 11C. Furthermore, the indentifying apparatus 2 has a function of identifying the liquid to be detected on the basis of a change in the amount of transmitted light of each optical fiber, and providing the identification result to an external apparatus.

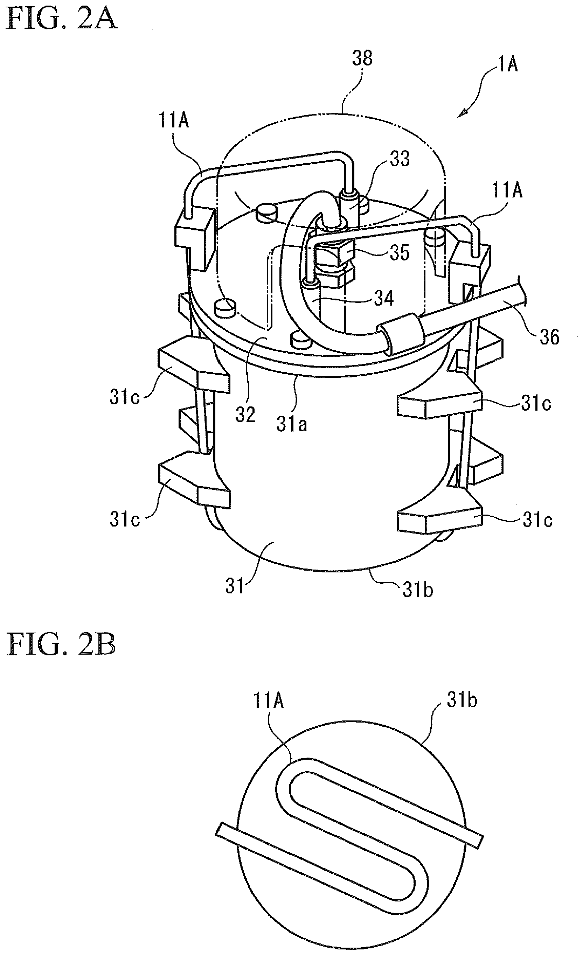

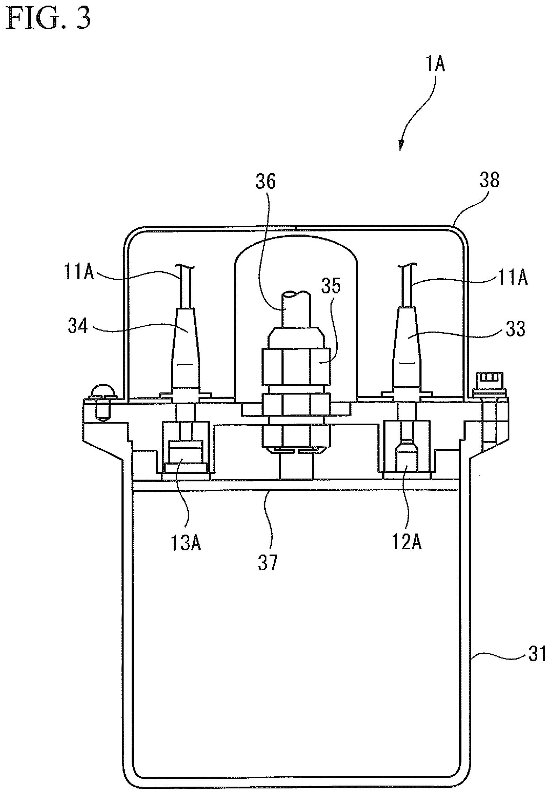

Subsequently, the detailed configuration of the first detecting unit 1A including the first optical fiber 11A, the first light emitting element 12A, and the first light receiving element 13A will be described with reference to FIGS. 2A, 2B, and 3. Although in FIGS. 2A, 2B, and 3, the first detecting unit 1A is representatively shown, the second detecting unit 1B and the third detecting unit 1C have the same configuration.

As shown in FIGS. 2A, 2B, and 3, the first detecting unit 1A has a casing 31, a lid 32, fiber connectors 33 and 34, a cable connector 35, a signal cable 36, a circuit board 37, and a protective cover 38, in addition to the first optical fiber 11A, the first light emitting element 12A, and the first light receiving element 13A.

The casing 31 is a resin housing which is provided with a flange 31a at the upper end and a bottom portion 31b at the lower end and has a cylindrical shape, and accommodates the first light emitting element 12A, the first light receiving element 13A, and the circuit board 37 therein. The lid 32 is a disc member having the same diameter as the flange 31a of the casing 31 and is bolted to the flange 31a with an O ring (not shown) interposed therebetween.

The fiber connector 33 has a role in mechanically connecting one end of the first optical fiber 11A to the upper surface of the lid 32 and introducing light emitted from the first light emitting element 12A housed in the casing 31 to one end of the first optical fiber 11 A. The fiber connector 34 has a role in mechanically connecting the other end of the first optical fiber 11A to the upper surface of the lid 32 and introducing light emitted from the other end of the first optical fiber 11A to the first light receiving element 13A housed in the casing 31.

The first optical fiber 11A is arranged so as to go around the outer circumference of the casing 31 while being guided by guide members 31c provided in the sidewall surface of the casing 31 in a state where one end is connected to the fiber connector 33 and the other end is connected to the fiber connector 34. FIG. 2B is a diagram when the bottom portion 31b of the casing 31 is viewed. As shown in the drawing, the first optical fiber 11A is bent such that two bent portions are formed in the bottom portion 31b of the casing 31. The bend radiuses of the two bent portions are set in accordance with the refractive index of the liquid A.

Although in FIG. 1, one bent portion is provided in the first optical fiber 11A, this is just for convenience so as to facilitate the description of the drawings, and in practice, two bent portions are provided as shown in FIG. 2B.

The cable connector 35 has a role in mechanically connecting one end of the signal cable 36 to the upper surface of the lid 32 and electrically connecting the circuit board 37 housed in the casing 31 and the signal cable 36. The signal cable 36 has one end connected to the circuit board 37 through the cable connector 35 and the other end connected to the identifying apparatus 2. The signal cable 36 has a role in transferring the electrical signals output from the identifying apparatus 2 to the circuit board 37, and transferring the electrical signals output from the circuit board 37 to the identifying apparatus 2.

The circuit board 37 is connected to the identifying apparatus 2 through the signal cable 36. In the upper surface of the circuit board 37, the first light emitting element 12A and the first light receiving element 13A are arranged, and a power source circuit which supplies power to the first light emitting element 12A, an amplifying circuit which amplifies the output of the first light receiving element 13A, and the like are formed. The first light emitting element 12A generates light according to the electrical signals input from the identifying apparatus 2 through the circuit board 37. The first light receiving element 13A outputs electrical signals according to light emitted from the other end of the first optical fiber 11A to the identifying apparatus 2 through the circuit board 37.

The protective cover 38 is provided on the upper surface of the lid 32 so as to cover the fiber connectors 33 and 34 and the cable connector 35, thereby protecting the connectors.

The first detecting unit 1A configured as above is fixedly provided taking the approach that a leaked liquid being stuck to the bent portion of the first optical fiber 11A at a place where the liquid to be detected is likely to leak. The second detecting unit 1B and the third detecting unit 1C are fixedly provided in the same state.

The above is the description relating to the configuration of the liquid identifying system including the liquid detector 1 in this embodiment. Hereinafter, the liquid detection/identification operation using the liquid identifying system will be described in detail.

First, prior to describing the liquid detection/identification operation using the liquid identifying system, the liquid detection/identification principle which is employed in this embodiment will be described as a premise.

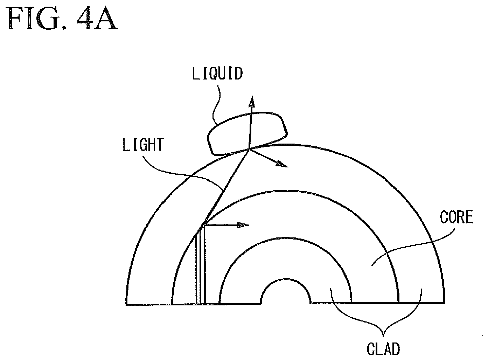

As described above, an optical fiber has a dual structure of a core which serves as a light propagation path and has a high refractive index, and a clad which covers the core and has a low refractive index. Even when the optical fiber is bent, if the reflection angle of light propagating through the core of the bent portion is smaller than the critical angle, light propagates inside the core without leaking outside the core. However, as shown in FIG. 4A, if the optical fiber is bent severely, and the reflection angle of light propagating through the core of the bent portion becomes greater than the critical angle, light leaks outside the core.

The inventors have focused on the characteristic of the optical fiber, and have verified the relationship between the bend radius of the bent portion and a change rate in the amount of transmitted light (that is, the amount of light leakage due to liquid sticking) for a plurality of types of liquids by providing the bent portions in the optical fibers and measuring the amount of transmitted light before the liquids are stuck to the bent portions and after the liquids are stuck to the bent portions.

As a result, it is understood that, as the bend radius of the bent portion is small, the amount of light leakage due to liquid sticking increases, and even a liquid having a refractive index lower than the core or even a liquid having a refractive index close to the core can be detected (of course, a liquid having a refractive index higher than the core can be detected).

However, if it is assumed that only one optical fiber is used, and the bend radius of the bent portion is set in accordance with a liquid having a refractive index lower than the core, not only the liquid but also a liquid having a refractive index higher than the liquid undergo change in the amount of transmitted light (light leakage occurs). For this reason, when there are a plurality of liquids to be detected, it is not possible to identify a liquid which is stuck.

Accordingly, the inventors have employed the configuration of a liquid detector in which a plurality of optical fibers provided with bent portions are used, and the bend radius of the bent portion of each optical fiber is set in accordance with the refractive index of a liquid to be detected.

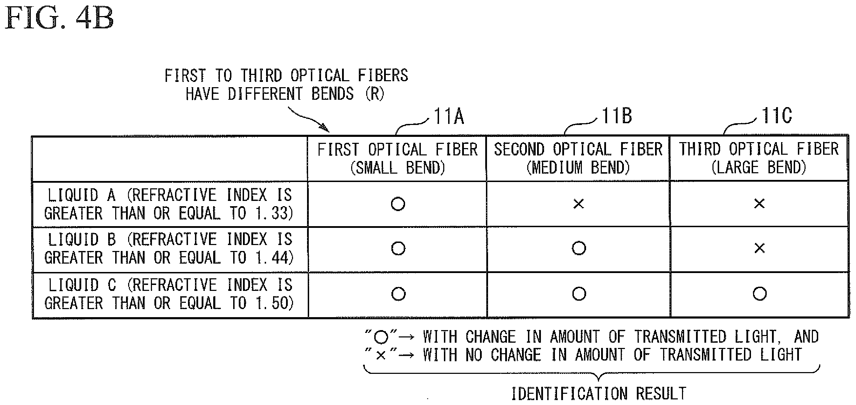

Since the bend radius of the bent portion provided in the first optical fiber 11A of the liquid detector 1 is set in accordance with the refractive index of the liquid A lower than the core, if a liquid (that is, the liquid A, B, or C) having a refractive index greater than or equal to the liquid A is stuck, change in the amount of transmitted light occurs (see FIG. 4B).

Since the bend radius of the bent portion provided in the second optical fiber 11B of the liquid detector 1 is set in accordance with the refractive index of the liquid B which is close to the core, if a liquid (that is, the liquid B or C) having a refractive index greater than or equal to the liquid B is stuck, change in the amount of transmitted light occurs (see FIG. 4B).

Since the bend radius of the bent portion in the third optical fiber 11C of the liquid detector 1 is set in accordance with the refractive index of the liquid C higher than the core, if a liquid (that is, the liquid C) having a refractive index greater than or equal to the liquid C is stuck, change in the amount of transmitted light occurs (see FIG. 4B).

Accordingly, when change in the amount of transmitted light occurs only in the first optical fiber 11A of the three optical fibers, it can be determined that the liquid A is stuck (the liquid A is leaking).

When change in the amount of transmitted light occurs only in the first optical fiber 11A and the second optical fiber 11B simultaneously, it can be determined that the liquid B is stuck (the liquid B is leaking).

When change in the amount of transmitted light occurs in all of the first optical fiber 11A, the second optical fiber 11B, and the third optical fiber 11C simultaneously, it can be determined that the liquid C is stuck (the liquid C is leaking). That is, it becomes possible to identify the liquids stuck to the optical fibers.

On the premise of the above-described liquid detection/identification principle, the liquid detection/identification operation using the liquid identifying system will be described as follows.

First, the identifying apparatus 2 outputs electrical signals for generating light having the reference light amount to the first light emitting element 12A, the second light emitting element 12B, and the third light emitting element 12C provided in the liquid detector 1.

Accordingly, light emitted from the first light emitting element 12A propagates inside the first optical fiber 11A and is then received by the first light receiving element 13A. Light emitted from the second light emitting element 12B propagates inside the second optical fiber 11B and is then received by the second light receiving element 13B. Light emitted from the third light emitting element 12C propagates inside the third optical fiber 11C and is then received by the third light receiving element 13C.

The first light receiving element 13A, the second light receiving element 13B, and the third light receiving element 13C output the electrical signals according to the amount of received light to the identifying apparatus 2.

The identifying apparatus 2 obtains the amount of received light of each light receiving element as the amount of transmitted light of each of the first optical fiber 11A, the second optical fiber 11B, and the third optical fiber 11C on the basis of the electrical signal input from each of the first light receiving element 13A, the second light receiving element 13B, and the third light receiving element 13C, and monitors a time shift in the amount of transmitted light.

When no liquid leakage occurs at a place where the first detecting unit 1A, the second detecting unit 1B, and the third detecting unit 1C are provided, since no liquid is stuck to the bent portion in each of the first optical fiber 11A, the second optical fiber 11B, and the third optical fiber 11C, the amount of transmitted light substantially represents a constant value.

When liquid leakage occurs, since a leaked liquid is stuck to the bent portion in each of the first optical fiber 11A, the second optical fiber 11B, and the third optical fiber 11C, change in the amount of transmitted light occurs in any of the first optical fiber 11A, the second optical fiber 11B, and the third optical fiber 11C depending on the refractive index of the liquid.

At this time, when change in the amount of transmitted light occurs only in the first optical fiber 11A, the identifying apparatus 2 determines that the liquid A is stuck to each optical fiber (that is, the liquid A is leaking).

When change in the amount of transmitted light occurs only in the first optical fiber 11A and the second optical fiber 11B simultaneously, the identifying apparatus 2 determines that the liquid B is stuck to each optical fiber (that is, the liquid B is leaking).

When change in the amount of transmitted light occurs in all of the first optical fiber 11A, the second optical fiber 11B, and the third optical fiber 11C, the identifying apparatus 2 determines that the liquid C is stuck to each optical fiber (that is, the liquid C is leaking).

As described above, according to the liquid identifying system including the liquid detector 1 in this embodiment, it becomes possible to identify the liquids stuck to the optical fibers even when there is a plurality of liquids to be detected.

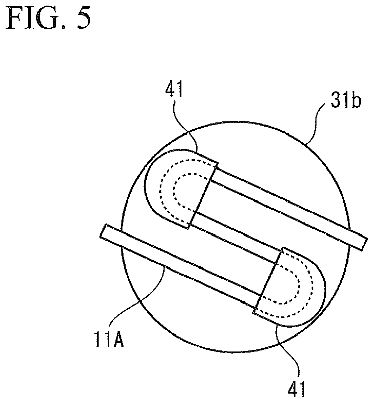

The invention is not limited to the foregoing embodiment, and the following modifications may be made.
(1) Although in the foregoing embodiment, a case where two bent portions are provided in one optical fiber has been described, the number of bent portions is not limited thereto, and one bent portion or three or more bent portions may be provided. Although as the number of bent portions in one optical fiber increases, the sticking width of the liquid increases, the amount of light leakage increases excessively, and the amount of emitted light of the optical fiber may significantly decrease. Conversely, detection accuracy may be lowered. For this reason, it is preferable that the number of bent portions in one optical fiber is two or three.
(2) As shown in FIG. 5, an absorber 41 which absorbs the associated liquid to be detected may be loaded in the bent portion of each optical fiber. With this, since the amount of the liquid to be detected which is stuck to the bent portion increases, liquid detection accuracy is improved. For example, an absorber which absorbs the liquid A may be loaded in the bent portion of the first optical fiber 11A, an absorber which absorbs the liquid B may be loaded in the bent portion of the second optical fiber 11B, and an absorber which absorbs the liquid C may be loaded in the bent portion of the third optical fiber 11C.
(3) Although in the foregoing embodiment, a case where the liquid detector 1 has the three detecting units of the first detecting unit 1A, the second detecting unit 1B, and the third detecting unit 1C has been described, the invention is not limited thereto, and the liquid detector 1 may be constituted as a single unit.
(4) Although in the foregoing embodiment, a case where there are three types of liquids to be detected has been described, the invention can be applied to a case where there are two types of liquids to be detected or four or more types of liquids to be detected.
(5) Although in the foregoing embodiment, in a state where the core is covered with the clad, the optical fiber is bent to provide the bent portion, the clad may be separated only in the bent portion. Therefore, since the amount of light leakage in the bent portion increases, thereby improving liquid detection accuracy.

### Industrial Applicability

According to the liquid detector and the liquid identifying system of the invention, it becomes possible to identify liquids stuck to the optical fibers even when there are a plurality of liquids to be detected.

### Reference Signs List

- 1:: liquid detector
- 2:: identifying apparatus
- 1A:: first detecting unit
- 11A:: first optical fiber
- 12A:: first light emitting element
- 13A:: first light receiving element
- 1B:: second detecting unit
- 11B:: second optical fiber
- 12B:: second light emitting element
- 13B:: second light receiving element
- 1C:: third detecting unit
- 11C:: third optical fiber
- 12C:: third light emitting element
- 13C:: third light receiving element

## Claims

1. A liquid detector (1) comprising:
a number of optical fibers (11A, 11B, 11C) corresponding to the number of a plurality of liquids (A, B, C) to be detected, the optical fibers (11A, 11B, 11C) being provided with bent portions;
light emitting elements (12A, 12B, 12C) which are respectively connected to the optical fibers (11A, 11B, 11C) and being adapted to input light according to electrical signals input therein from the outside to one end of the optical fibers (11A, 11B, 11C); and
light receiving elements (13A, 13B, 13C) which are respectively connected to the optical fibers (11A, 11B, 11C) to output electrical signals according to received light emitted from the other end of the optical fibers to the outside,
wherein the bend radiuses of the bent portions of the optical fibers (11A, 11B, 11C) are set in accordance with differing refractive indexes of the plurality of liquids to be detected in such a manner that only if an associated liquid, or a liquid having a refractive index higher than the associated liquid, is stuck to its associated bend radius, a change in the amount of transmitted light of that bent portion occurs.

2. The liquid detector (1) according to Claim 1,
wherein a plurality of bent portions are provided in each of the optical fibers.

3. The liquid detector (1) according to Claim 1 or 2,
wherein an absorber (41) which absorbs the associated liquid to be detected is loaded in each of the bent portions.

4. A liquid identifying system comprising:
the liquid detector (1) according to any one of Claims 1 to 3; and
an identifying apparatus (2) which outputs an electrical signal for generating light having the reference light amount for each light emitting element (12A, 12B, 12C) provided in the liquid detector (1), obtains the amount of received light of each light receiving element (13A, 13B, 13C) as the amount of transmitted light of each optical fiber (11A, 11B, 11C) on the basis of an electrical signal input from each light receiving element provided in the liquid detector (1), and identifies the liquid to be detected on the basis of change in the amount of transmitted light of each optical fiber.

## Patentansprüche

1. Flüssigkeitsdetektor (1), Folgendes umfassend:
eine Anzahl an Lichtwellenleitern (11A, 11B, 11C), welche der Anzahl einer Vielzahl von zu erkennenden Flüssigkeiten (A, B, C) entspricht, wobei die Lichtwellenleiter (11A, 11B, 11C) mit gekrümmten Abschnitten versehen sind;
lichtemittierende Elemente (12A, 12B, 12C), welche jeweils mit den Lichtwellenleitern (11A, 11B, 11C) verbunden und geeignet sind, um Licht entsprechend elektrischen Signalen, die von außen in sie eingeleitetet werden, in ein Ende der Lichtwellenleiter (11A, 11B, 11C) einzugeben; und
lichtempfangende Elemente (13A, 13B, 13C), welche jeweils mit den Lichtwellenleitern (11A, 11B, 11C) verbunden sind, um elektrische Signale entsprechend dem empfangenen Licht, das vom anderen Ende der Lichtwellenleiter nach außerhalb abgestrahlt wird, auszugeben,
wobei die gekrümmten Radien der gekrümmten Abschnitte der Lichtwellenleiter (11A, 11B, 11C) entsprechend unterschiedlicher Brechungsindizes der Vielzahl von zu erkennenden Flüssigkeiten in einer Weise festgelegt sind, dass nur, wenn eine zugeordnete Flüssigkeit, oder eine Flüssigkeit, welche einen höheren Brechungsindex als die zugeordnete Flüssigkeit aufweist, an ihrem zugeordneten gekrümmten Radius haftet, eine Änderung in der Menge an durchgelassenem Licht dieses gekrümmten Abschnittes eintritt.

2. Flüssigkeitsdetektor (1) nach Anspruch 1,
bei welchem eine Vielzahl von gekrümmten Abschnitten in jedem der Lichtwellenleiter bereitgestellt ist.

3. Flüssigkeitsdetektor (1) nach Anspruch 1 oder 2,
bei welchem ein Absorber (41), welcher die zugeordnete zu erkennende Flüssigkeit absorbiert, in jeden der gekrümmten Abschnitte geladen ist.

4. Flüssigkeitsidentifizierungssystem, Folgendes beinhaltend:
den Flüssigkeitsdetektor (1) nach einem der Ansprüche 1 bis 3; und
ein Identifizierungsgerät (2), welches ein elektrisches Signal zum Erzeugen von Licht ausgibt, welches die Referenzlichtmenge für jedes lichtemittierende Element (12A, 12B, 12C) aufweist, welches in dem Flüssigkeitsdetektor (1) bereitgestellt ist, die Menge an empfangenem Licht für jedes lichtempfangende Element (13A, 13B, 13C) als die Menge an durchgelassenem Licht eines jeden Lichtwellenleiters (11A, 11B, 11C) auf der Grundlage einer Einleitung eines elektrischen Signals von jedem lichtempfangenden Element, welches in dem Flüssigkeitsdetektor (1) bereitgestellt ist, erzielt, und die zu erkennende Flüssigkeit auf der Grundlage einer Änderung in der Menge an durchgelassenem Licht eines jeden Lichtwellenleiters identifiziert.

## Revendications

1. Détecteur de liquide (1) comprenant:
un nombre de fibres optiques (11A, 11B, 11C) correspondant au nombre d'une pluralité de liquides (A, B, C) à détecter, les fibres optiques (11A, 11B, 11C) étant pourvues de portions fléchies;
des éléments luminescents (12A, 12B, 12C) qui sont respectivement reliés aux fibres optiques (11A, 11B, 11C) et qui sont adaptés pour faire entrer de la lumière en fonction de signaux électriques entrés à l'intérieur depuis l'extérieur vers une extrémité des fibres optiques (11A, 11B, 11C); et
des éléments de réception de lumière (13A, 13B, 13C) qui sont respectivement reliés aux fibres optiques (11A, 11B, 11C) pour émettre des signaux électriques en fonction de la lumière reçue émise depuis l'autre extrémité des fibres optiques vers l'extérieur,
les rayons de courbure des portions fléchies des fibres optiques (11A, 11B, 11C) étant définis en fonction des différents indices de réfraction de la pluralité des liquides à détecter d'une manière telle qu'uniquement dans le cas où un liquide associé, ou un liquide ayant un indice de réfraction supérieur à celui du liquide associé, est coincé à son rayon de courbure associé, un changement dans la quantité de lumière transmise de cette portion fléchie se produit.

2. Détecteur de liquide (1) selon la revendication 1,
une pluralité de portions fléchies étant fournies dans chacune des fibres optiques.

3. Détecteur de liquide (1) selon la revendication 1 ou 2,
un absorbeur (41) qui absorbe le liquide associé à détecter étant chargé dans chacune des portions fléchies.

4. Système d'identification de liquide comprenant:
le détecteur de liquide (1) selon l'une quelconque des revendications 1 à 3; et
un appareil d'identification (2) qui émet un signal électrique pour générer de la lumière ayant la quantité de lumière de référence pour chaque élément luminescent (12A, 12B, 12C) fourni dans le détecteur de liquide (1), obtient la quantité de lumière reçue de chaque élément de réception de lumière (13A, 13B, 13C) comme quantité de lumière transmise de chaque fibre optique (11A, 11B, 11C) sur la base d'une entrée de signal électrique depuis chaque élément de réception de lumière fourni dans le détecteur de liquide (1), et identifie le liquide à détecter sur la base du changement de la quantité de lumière transmise de chaque fibre optique.
